# EUROPÄISCHE PATENTSCHRIFT

(11) **EP 2 493 969 B1**
(45) Veröffentlichungstag und Bekanntmachung des Hinweises auf die Patenterteilung: **24.07.2013**
(21) Anmeldenummer: 10774157.1
(22) Anmeldetag: 18.10.2010
(51) Int. Cl.: C08K 3/08, C08L 77/00, C08K 5/00

(54) **WÄRMEALTERUNGSBESTÄNDIGE POLYAMIDE MIT FLAMMSCHUTZ**
HEAT AGING-RESISTANT POLYAMIDES WITH FLAME RETARDANCY
POLYAMIDES IGNIFUGES RÉSISTANT AU VIEILLISSEMENT THERMIQUE

(30) Priorität: 27.10.2009 EP 09174175
(43) Veröffentlichungstag der Anmeldung: 05.09.2012
(73) Patentinhaber: BASF SE, 67056 Ludwigshafen (DE)
(72) Erfinder: PRUSTY, Manoranjan, 68167 Mannheim (DE); BAUMERT, Martin, 69221 Dossenheim (DE); ROTH, Michael, 64686 Lautertal (DE); USKE, Klaus, 67098 Bad Dürkheim (DE)
(86) Internationale Anmeldenummer: PCT/EP2010/065580
(87) Internationale Veröffentlichungsnummer: WO 2011/051121

(56) Entgegenhaltungen:
- EP-A1- 0 592 942
- EP-A1- 1 498 445
- EP-A1- 1 683 830
- EP-A2- 1 500 676
- US-A1- 2005 250 885

## Beschreibung

Die Erfindung betrifft thermoplastische Formmassen, enthaltend
A) 10 bis 98 Gew.-% eines Polyamides
B) 0,001 bis 20 Gew.-% Eisenpulver mit einer Teilchengröße von maximal 10 µm (d₅₀-Wert) und einer spezifischen BET-Oberfläche von 0,1 bis 5 m²/g gemäß DIN ISO 9277
C) 1 bis 40 Gew.-% eines halogenfreien Flammschutzmittels aus der Gruppe der phosphorhaltigen oder stickstoffhaltigen Verbindungen oder P-N-Kondensate oder deren Mischungen
D) 0 bis 70 Gew.-% weiterer Zusatzstoffe,
wobei die Summe der Gewichtsprozente der Komponenten A) bis D) 100 % ergibt.

Weiterhin betrifft die Erfindung die Verwendung der erfindungsgemäßen Formmassen zur Herstellung von Fasern, Folien und Formkörpern jeglicher Art, sowie die hierbei erhältlichen Formkörper.

Thermoplastische Polyamide wie PA6 und PA66 werden häufig in Form von glasfaserverstärkten Formmassen als Konstruktionswerkstoffe für Bauteile, die während ihrer Lebensdauer erhöhten Temperaturen ausgesetzt sind, eingesetzt, wobei es zu thermooxidativen Schädigungen kommt. Durch Zusatz von bekannten Wärmestabilisatoren kann das Auftreten der thermooxidativen Schädigung zwar hinausgezögert nicht aber dauerhaft verhindert werden, was sich z.B. in einem Abfallen der mechanischen Kennwerte äußert. Die Verbesserung der Wärmealterungsbeständigkeit (WAB) von Polyamiden ist überaus wünschenswert, da dadurch längere Lebenszeiten für thermisch belastete Bauteile erreicht werden können, bzw. deren Ausfallrisiko gesenkt werden kann. Alternativ kann eine verbesserte WAB auch den Einsatz der Bauteile bei höheren Temperaturen ermöglichen.

Der Einsatz von elementarem Eisenpulver in Polyamiden ist aus den DE-A 26 02 449 , JP-A 09/221590 , JP-A 2000/86889 (jeweils als Füllstoff), JP-A 2000/256 123 (als Dekorzusatz) sowie WO 2006/074912 und WO 2005/007727 (Stabilisatoren) bekannt.

Aus der EP-A 1 846 506 ist eine Kombination von Cu-haltigen Stabilisatoren mit Eisenoxiden für Polyamide bekannt.

Die Wärmealterungsbeständigkeit ist in den bekannten Formmassen, insbesondere über längere thermische Belastungszeiträume, immer noch unzureichend.

Die Oberfläche der Formkörper ist verbesserungsbedürftig, da bei der Wärmealterung sich poröse Stellen bilden sowie Blasenbildung erfolgt.

In der jüngeren EP-Anmeldung Aktenzeichen: 08171803.3 werden Kombinationen von Polyethyleniminen mit Eisenpulver zur Verbesserung der WAB vorgeschlagen. Flammschutzmittel werden in den genannten Schriften nur allgemein erwähnt.

Der vorliegenden Erfindung lag daher die Aufgabe zugrunde, flammgeschützte thermoplastische Polyamidformmassen zur Verfügung zu stellen, welche eine verbesserte WAB und eine gute Oberfläche nach Wärmealterung sowie Mechanik aufweisen.

Demgemäß wurden die eingangs definierten Formmassen gefunden. Bevorzugte Ausführungsformen sind den Unteransprüchen zu entnehmen.

Als Komponente A) enthalten die erfindungsgemäßen Formmassen 10 bis 98, vorzugsweise 20 bis 97 und insbesondere 25 bis 90 Gew.-% mindestens eines Polyamides.

Die Polyamide der erfindungsgemäßen Formmassen weisen im allgemeinen eine Viskositätszahl von 90 bis 350, vorzugsweise 110 bis 240 ml/g auf, bestimmt in einer 0,5 gew.-%igen Lösung in 96 gew.-%iger Schwefelsäure bei 25°C gemäß ISO 307.

Halbkristalline oder amorphe Harze mit einem Molekulargewicht (Gewichtsmittelwert) von mindestens 5.000, wie sie z.B. in den amerikanischen Patentschriften 2 071 250, 2 071 251, 2 130 523, 2 130 948, 2 241 322, 2 312 966, 2 512 606 und 3 393 210 beschrieben werden, sind bevorzugt.

Beispiele hierfür sind Polyamide, die sich von Lactamen mit 7 bis 13 Ringgliedern ableiten, wie Polycaprolactam, Polycapryllactam und Polylaurinlactam sowie Polyamide, die durch Umsetzung von Dicarbonsäuren mit Diaminen erhalten werden.

Als Dicarbonsäuren sind Alkandicarbonsäuren mit 6 bis 12, insbesondere 6 bis 10 Kohlenstoffatomen und aromatische Dicarbonsäuren einsetzbar. Hier seien nur Adipinsäure, Azelainsäure, Sebacinsäure, Dodecandisäure und Terephthal- und/oder Isophthalsäure als Säuren genannt.

Als Diamine eignen sich besonders Alkandiamine mit 6 bis 12, insbesondere 6 bis 8 Kohlenstoffatomen sowie m-Xylylendiamin (z.B. Ultramid^{®} X17 der BASF SE, ein 1:1 molares Verhältnis von MXDA mit Adipinsäure), Di-(4-aminophenyl)methan, Di-(4-amino-cyclohexyl-methan, 2,2-Di- (4-aminophenyl-propan, 2,2-Di-(4-aminocyclohexyl)-propan oder 1,5-Diamino-2-methyl-pentan.

Bevorzugte Polyamide sind Polyhexamethylenadipinsäureamid, Polyhexamethylensebacinsäureamid und Polycaprolactam sowie Copolyamide 6/66, insbesondere mit einem Anteil von 5 bis 95 Gew.-% an Caprolactam-Einheiten (z.B. Ultramid^{®} C31 der BASF SE).

Weiterhin geeignete Polyamide sind erhältlich aus ω-Aminoalkylnitrilen wie beispielsweise Aminocapronitril (PA 6) und Adipodinitril mit Hexamethylendiamin (PA 66) durch sog. Direktpolymerisation in Anwesenheit von Wasser, wie beispielsweise in der DE-A 10313681, EP-A 1198491 und EP 922065 beschrieben.

Außerdem seien auch noch Polyamide erwähnt, die z.B. durch Kondensation von 1,4-Diaminobutan mit Adipinsäure unter erhöhter Temperatur erhältlich sind (Polyamid 4,6). Herstellungsverfahren für Polyamide dieser Struktur sind z.B. in den EP-A 38 094, EP-A 38 582 und EP-A 39 524 beschrieben.

Weiterhin sind Polyamide, die durch Copolymerisation zweier oder mehrerer der vorgenannten Monomeren erhältlich sind, oder Mischungen mehrerer Polyamide geeignet, wobei das Mischungsverhältnis beliebig ist. Besonders bevorzugt sind Mischungen von Polyamid 66 mit anderen Polyamiden, insbesondere Copolyamide 6/66.

Weiterhin haben sich solche teilaromatischen Copolyamide wie PA 6/6T und PA 66/6T als besonders vorteilhaft erwiesen, deren Triamingehalt weniger als 0,5, vorzugsweise weniger als 0,3 Gew.-% beträgt (siehe EP-A 299 444). Weitere hochtemperaturbeständige Polyamide sind aus der EP-A 19 94 075 bekannt (PA 6T/61/MXD6)

Die Herstellung der bevorzugten teilaromatischen Copolyamide mit niedrigem Triamingehalt kann nach den in den EP-A 129 195 und 129 196 beschriebenen Verfahren erfolgen.

Die nachfolgende nicht abschließende Aufstellung enthält die genannten, sowie weitere Polyamide A) im Sinne der Erfindung und die enthaltenen Monomeren.

| AB-Polymere: | |
|---|---|
| PA 4 | Pyrrolidon |
| PA 6 | ε-Caprolactam |
| PA 7 | Ethanolactam |
| PA 8 | Capryllactam |
| PA 9 | 9-Aminopelargonsäure |
| PA 11 | 11-Aminoundecansäure |
| PA 12 | Laurinlactam |

| AA/BB-Polymere | |
|---|---|
| PA 46 | Tetramethylendiamin, Adipinsäure |
| PA 66 | Hexamethylendiamin, Adipinsäure |
| PA 69 | Hexamethylendiamin, Azelainsäure |
| PA 610 | Hexamethylendiamin, Sebacinsäure |
| PA 612 | Hexamethylendiamin, Decandicarbonsäure |
| PA 613 | Hexamethylendiamin, Undecandicarbonsäure |
| PA 1212 | 1,12-Dodecandiamin, Decandicarbonsäure |
| PA 1313 | 1,13-Diaminotridecan, Undecandicarbonsäure |
| PA 6T | Hexamethylendiamin, Terephthalsäure |
| PA MXD6 | m-Xylylendiamin, Adipinsäure |
| PA 9 T | 1,9-Nonandiamin, Adipinsäure |
| PA 61 | Hexamethylendiamin, Isophthalsäure |
| PA 6-3-T | Trimethylhexamethylendiamin, Terephthalsäure |
| PA 6/6T | (siehe PA 6 und PA 6T) |
| PA 6/66 | (siehe PA 6 und PA 66) |
| PA 6/12 | (siehe PA 6 und PA 12) |
| PA 66/6/610 | (siehe PA 66, PA 6 und PA 610) |
| PA 6I/6T | (siehe PA 6I und PA 6T) |
| PA PACM 12 | Diaminodicyclohexylmethan, Laurinlactam |
| PA 61/6T/PACM | wie PA 6I/6T + Diaminodicyclohexylmethan |
| PA 12/MACMI | Laurinlactam, Dimethyl-diaminodicyclohexylmethan, Isophthalsäure |
| PA 12/MACMT | Laurinlactam, Dimethyl-diaminodicyclohexylmethan, Terephthalsäure |
| PA PDA-T | Phenylendiamin, Terephthalsäure |

Als Komponente B) enthalten die erfindungsgemäßen Formmassen 0,001 bis 20, vorzugsweise 0,05 bis 10 und insbesondere 0,1 bis 5 Gew.-% Eisenpulver mit einer Teilchengröße (auch als Partikelgröße bezeichnet) von maximal 10 µm (d₅₀-Wert), welches durch thermische Zersetzung von Eisenpentacarbonyl erhältlich ist.

Eisen kommt in mehreren allotropen Modifikationen vor:
1. α-Fe (Ferrit) bildet raumzentrierte Würfelgitter, ist magnetisierbar, löst wenig Kohlenstoff, kommt in reinem Eisen bis 928°C vor. Bei 770°C (Curie-Temperatur) verliert es seine ferromagnetischen Eigenschaften und wird paramagnetisch; Eisen im Temperaturbereich von 770 bis 928°C wird auch als β-Fe bezeichnet. Bei gewöhnlicher Temperatur und einem Druck von mindestens 13000 MPa geht α-Fe in sog. ε-Fe unter einer Vol.-Verminderung von ca. 0,20 cm³/mol über, wobei sich die Dichte von 7,85 auf 9,1 (bei 20000 MPa) erhöht.
2. γ-Fe (Austenit) bildet flächenzentrierte Würfelgitter, ist unmagnetisch, löst viel Kohlenstoff und ist nur im Temperaturbereich von 928 bis 1398°C zu beobachten.
3. δ-Fe, raumzentriert, existiert zwischen 1398°C und dem Schmelzpunkt 1539°C.

Metallisches Eisen ist allgemein silberweiß, mit einer Dichte 7,874 (Schwermetall), Schmelzpunkt 1539°C, Siedepunkt 2880°C; spezifische Wärme (zwischen 18 und 100°C) etwa 0,5 g⁻¹ K-¹, Zugfestigkeit 220 bis 280 N/mm². Die Werte gelten für das chemisch reine Eisen.
Großtechnisch wird Eisen durch Verhüttung von Eisenerzen, Eisenschlacken, Kiesab-bränden, Gichtstaub und durch Umschmelzen von Schrott und Legierung hergestellt.

Das erfindungsgemäße Eisenpulver wird durch thermische Zersetzung von Eisenpentacarbonyl hergestellt, vorzugsweise bei Temperaturen von 150°C bis 350°C. Die hierbei erhältlichen Partikel (Teilchen) haben eine vorzugsweise sphärische Form, d.h. kugelförmig oder nahezu kugelförmige Form (auch als sphärolitisch bezeichnet).

Bevorzugtes Eisenpulver weist eine Teilchengrößenverteilung (Partikelgrößenverteilung) wie nachstehend beschrieben auf, wobei die Teilchengrößenverteilung mittels Laserbeugung in einer hoch verdünnten wässrigen Suspension (z.B. mit Beckmann LS13320 Gerät) bestimmt wird. Optional kann die nachfolgend beschriebene Teilchengröße (und Verteilung) durch Mahlen oder/und Sieben eingestellt werden.

Hierbei bedeutet dₓₓ = XX% des Gesamtvolumens der Partikels ist kleiner als der Wert.
- d₅₀-Werte:: max. 10 µm, vorzugsweise 1,6 bis 8, insbesondere 2,9 bis 7,5 µm, ganz besonders 3,4 bis 5,2 µm
- d₁₀-Werte:: vorzugsweise 1 bis 5 µm, insbesondere 1 bis 3 und ganz besonders 1,4 bis 2,7 µm
- d₉₀-Werte:: vorzugsweise 3 bis 35 µm, insbesondere 3 bis 12 und ganz besonders 6,4 bis 9,2 µm.

Bevorzugt weist die Komponente B) einen Eisengehalt von 97 bis 99,8 g/1 00 g, vorzugsweise von 97,5 bis 99,6 g/100 g auf. Der Gehalt an weiteren Metallen beträgt vorzugsweise unter 1000 ppm, insbesondere unter 100 ppm und ganz besonders unter 10 ppm.

Der Fe-Gehalt wird üblicherweise durch Infrarotspektroskopie bestimmt.
Der C-Gehalt beträgt vorzugsweise 0,01 bis 1,2, vorzugsweise 0,05 bis 1,1 g/100 g und insbesondere 0,4 bis 1,1 g/100g. Dieser C-Gehalt entspricht bei den bevorzugten Eisenpulvern solchen, die im Anschluß an die thermische Zersetzung nicht mit Wasserstoff reduziert werden.
Der C-Gehalt wird üblicherweise durch Verbrennen der Probenmenge im Sauerstoffstrom und anschließender IR Detektion des entstandenen CO₂-Gases (mittels Leco CS230 oder CS-mat 6250 der Firma Juwe) in Anlehnung an ASTM E1019 bestimmt.

Der Stickstoffgehalt beträgt vorzugsweise max. 1,5 g/100 g, bevorzugt von 0,01 bis 1,2 g/100g.
Der Sauerstoffgehalt beträgt vorzugsweise max. 1,3 g/100g, bevorzugt 0,3 bis 0,65 g/100g.
Die Bestimmungen von N und O erfolgt durch Erhitzen der Probe im Graphitofen auf ca. 2100°C. Der hierbei in der Probe erhaltene Sauerstoff wird zu CO umgesetzt und über einen IR-Detektor gemessen. Der unter den Reaktionsbedingungen freigesetzte N aus den N-haltigen Verbindungen wird mit dem Trägergas ausgetragen und mittels WLD (Thermal Conductivity Detector/TC) detektiert und erfasst (beide Methoden in Anlehnung an ASTM E1019).

Die Klopfdichte (tap density) beträgt vorzugsweise 2,5 bis 5 g/cm³, insbesondere 2,7 bis 4,4 g/cm³. Darunter wird im Allgemeinen die Dichte verstanden, wenn das Pulver in den Container z.B. gefüllt und geschüttelt wird, um eine Kompaktierung zu erzielen. Weiterhin bevorzugte Eisenpulver können mit Eisenphosphat, Eisenphosphit oder SiO₂ oberflächlich beschichtet sein.

Die BET-Oberfläche gemäß DIN ISO 9277 beträgt von 0,1 bis 10 m²/g, insbesondere 0,1 bis 5 m²/g, bevorzugt 0,2 bis 1 m²/g und insbesondere 0,4 bis 1 m²/g.

Um eine besonders gute Verteilung der Eisenpartikel zu erzielen, kann man einen Batch mit einem Polymeren einsetzen. Polymere wie Polyolefine, Polyester oder Polyamide sind hierfür geeignet, wobei vorzugsweise das Batchpolymer gleich der Komponente A) ist. Der Masseanteil des Eisens im Polymeren beträgt in der Regel 15 bis 80, vorzugsweise 20 bis 40 Masse-%.

Als Komponente C) enthalten die erfindungsgemäßen Formmassen 1 bis 40, vorzugsweise 2 bis 30 und insbesondere 5 bis 20 Gew.-% eines halogenfreien Flammschutzmittels ausgewählt aus der Gruppe der stickstoffhaltigen oder phosphorhaltigen Verbindungen oder der P-N-Kondensate oder deren Mischungen.

Das gemäß der Erfindung (Komponente C) bevorzugt geeignete Melamincyanurat ist ein Reaktionsprodukt aus vorzugsweise äquimolaren Mengen von Melamin (Formel I) und Cyanursäure bzw. Isocyanursäure (Formeln la und Ib)

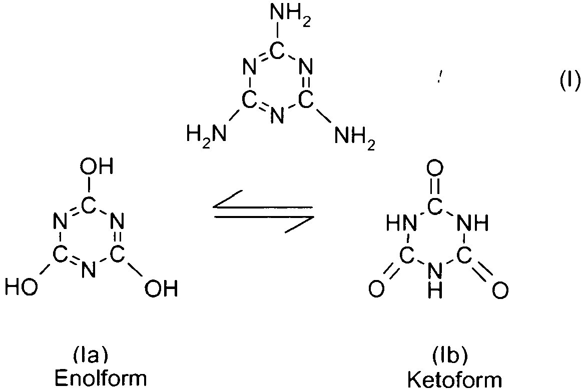

Man erhält es z.B. durch Umsetzung von wässrigen Lösungen der Ausgangsverbindungen bei 90 bis 100°C. Das im Handel erhältliche Produkt ist ein weißes Pulver mit einer mittleren Korngröße d₅₀ von 1,5 - 7 µm.

Weitere geeignete Verbindungen (oft auch als Salze oder Addukte bezeichnet) sind Melamin, Melaminborat, -oxalat, -phosphat prim., -phosphat sec. und -pyrophosphat sec., Neopentylglycolborsäuremelamin sowie polymeres Melaminphosphat (CAS-Nr 56386-64-2).

Geeignete Guanidinsalze sind

| | CAS-Nr. |
|---|---|
| G-carbonat | 593-85-1 |
| G-cyanurat prim. | 70285-19-7 |
| G-phosphat prim. | 5423-22-3 |
| G-phosphat sec. | 5423-23-4 |
| G-sulfat prim. | 646-34-4 |
| G-sulfat sec. | 594-14-9 |
| Pentaerythritborsäureguanidin | N.A. |
| Neopentylglycolborsäureguanidin | N.A. |
| sowie Harnstoffphosphat grün | 4861-19-2 |
| Harnstoffcyanurat | 57517-11-0 |
| Ammelin | 645-92-1 |
| Ammelid | 645-93-2 |
| Melem | 1502-47-2 |
| Melon | 32518-77-7 |
| Melam | 3576-88-3 |

Unter Verbindungen im Sinne der vorliegenden Erfindung sollen sowohl z.B. Benzoguanamin selbst und dessen Addukte bzw. Salze als auch die am Stickstoff substituierten Derivate und dessen Addukte bzw. Salze verstanden werden.

Weiterhin geeignet sind Ammoniumpolyphosphat (NH₄PO₃)ₙ mit n ca. 200 bis 1000 bevorzugt 600 bis 800, und Tris(hydroxyethyl)isocyanurat (THEIC) der Formel (II) 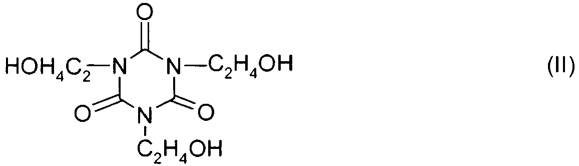 oder dessen Umsetzungsprodukte mit aromatischen Carbonsäuren Ar(COOH)ₘ, welche gegebenenfalls in Mischung miteinander vorliegen können, wobei Ar ein ein-, zwei- oder dreikerniges aromatisches Sechsringsystem bedeutet und m 2, 3 oder 4 ist.

Geeignete Carbonsäuren sind beispielsweise Phthalsäure, Isophthalsäure, Terephthalsäure, 1,3,5-Benzoltricarbonsäure, 1,2,4-Benzoltricarbonsäure, Pyromellithsäure, Mellophansäure, Prehnitsäure, 1-Naphthoesäure, 2-Naphthoesäure, Naphthalindicarbonsäuren und Anthracencarbonsäuren.

Die Herstellung erfolgt durch Umsetzung des Tris(hydroxyethyl)isocyanurats mit den Säuren, ihren Alkylestern oder ihren Halogeniden gemäß den Verfahren der EP-A 584 567.

Derartige Umsetzungsprodukte stellen ein Gemisch von monomeren und oligomeren Estern dar, welche auch vernetzt sein können. Der Oligomerisierungsgrad beträgt üblicherweise 2 bis ca. 100, vorzugsweise 2 bis 20. Bevorzugt werden Mischungen von THEIC und/oder dessen Umsetzungsprodukte mit phosphorhaltigen Stickstoffverbindungen, insbesondere (NH₄PO₃)ₙ oder Melaminpyrophosphat oder polymeres Melaminphosphat eingesetzt. Das Mischungsverhältnis z.B. von (NH₄PO₃)ₙ zu THEIC beträgt vorzugsweise 90 bis 50 zu 10 bis 50, insbesondere 80 bis 50 zu 50 bis 20 Gew.-%, bezogen auf die Mischung derartiger Komponenten B).

Weiterhin geeignet sind Benzoguanamin-Verbindungen der Formel (III) 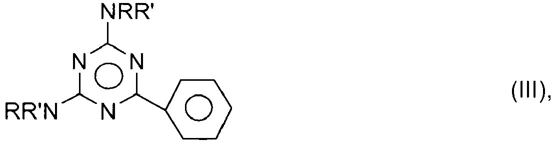 in der R,R' geradkettige oder verzweigte Alkylreste mit 1 bis 10 C-Atomen, bevorzugt Wasserstoff bedeutet und insbesondere deren Addukte mit Phosphorsäure, Borsäure und/oder Pyrophosphorsäure.

Bevorzugt sind ferner Allantoin-Verbindungen der Formel (IV) 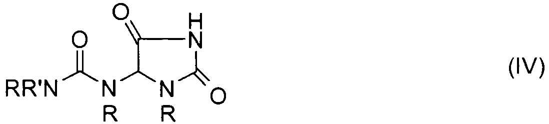 wobei R,R' die in Formel III angegebene Bedeutung haben sowie deren Salze mit Phosphorsäure, Borsäure und/oder Pyrophosphorsäure sowie Glycolurile der Formel (V) oder dessen Salze mit den o.g. Säuren 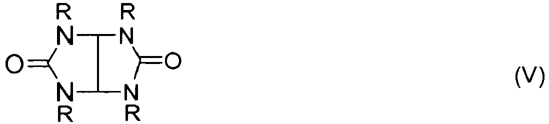 in der R die in Formel (III) genannte Bedeutung hat.

Geeignete Produkte sind im Handel oder gemäß DE-A 196 14 424 erhältlich.

Das gemäß der Erfindung verwendbare Cyanguanidin (Formel VI) erhält man z.B. durch Umsetzung von Kalkstickstoff (Calciumcyanamid) mit Kohlensäure, wobei das entstehende Cyanamid bei pH 9 bis 10 zu Cyanguanidin dimerisiert.

CaNCN + H₂O CO₂ H₂N-CN + CₐCO₃

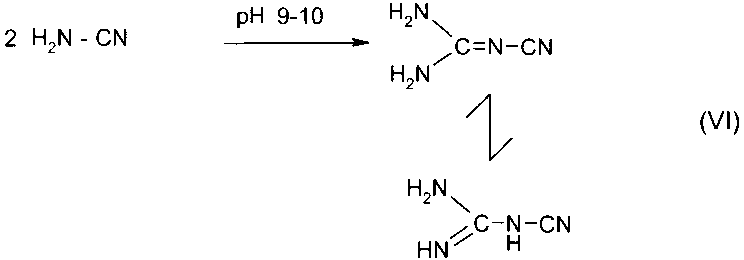

Das im Handel erhältliche Produkt ist ein weißes Pulver mit einem Schmelzpunkt von 209°C bis 211 °C.

Als phosphorhaltige anorganische Verbindungen sind Phosphinsäuresalze der Formel (I) und/oder Diphosphinsäuresalze der Formel (II) und/oder deren Polymere bevorzugt, 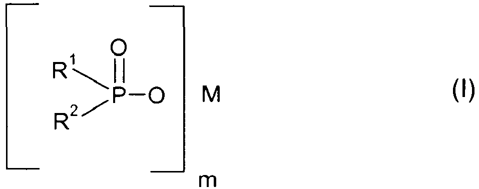 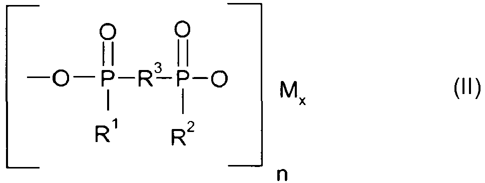 wobei die Substituenten folgende Bedeutung haben:
- R¹, R²: Wasserstoff, C₁- bis C₆-Alkyl, vorzugsweise C₁- bis C₄-Alkyl, linear oder verzweigt, z.B. Methyl, Ethyl, n-Propyl, iso-Propyl, n-Butyl, tert.-Butyl, n-Pentyl; Phenyl; wobei bevorzugt mindestens ein Rest R¹ oder R², insbesondere R¹ und R² Wasserstoff ist;
- R³: C₁- bis C₁₀-Alkylen, linear oder verzweigt, z.B. Methylen, Ethylen, n-Propylen, iso-Propylen, n-Butylen, tert.-Butylen, n-Pentylen, n-Octylen, n-Dodecylen; Arylen, z.B. Phenylen, Naphthylen; Alkylarylen, z.B. Methyl-phenylen, Ethyl-phenylen, tert.-Butyl-phenylen, Methyl-naphthylen, Ethyl-naphthylen, tert.-Butyl-naphthylen; Arylalkylen, z.B. Phenyl-methylen, Phenyl-ethylen, Phenyl-propylen, Phenylbutylen;
- M: ein Erdalkali-, Alkalimetall, Al, Zn, Fe, Bor;
- m: eine ganze Zahl von 1 bis 3;
- n: eine ganze Zahl von 1 und 3 und
- x: 1 oder 2.

Besonders bevorzugt sind Verbindungen der Formel II, in denen R¹ und R² Wasserstoff ist, wobei M vorzugsweise Zn oder Al ist und Calciumphosphinat ganz besonders bevorzugt ist.

Derartige Produkte sind im Handel z.B. als Calciumphosphinat erhältlich.

Geeignete Salze der Formel I oder II, in denen nur ein Rest R¹ oder R² Wasserstoff bedeutet, sind z.B. Salze der Phenylphosphinsäure, wobei deren Na- und/oder Ca-Salze bevorzugt sind.

Insbesondere bevorzugt sind Verbindungen der Formel II in denen R¹ und R² Ethylreste sind, wobei M vorzugsweise Zn oder Ca und Al-diethylphosphinat besonders bevorzugt ist. Insbesondere Al-diethylphosphinat in Mischung mit Melamincyanurat und/oder Melaminpolyphosphat (3 : 1 bis 1,5 : 1) sind als Flammschutzmittelsystem bevorzugt. Diese enthalten bis zu 10, vorzugsweise bis 6 Gew.-% (bezogen auf 100 Gew.-% der obigen Mischung) vorzugsweise eines Borates als Synergist.

Geeignete Metallborate sind Borate von Metallen der 1. bis 3. Hauptgruppe sowie der 1 bis 8 Nebengruppe des Periodensystems, wobei wasserfreies Zinkborat oder Zinkborat der allgemeinen Formel

2Zn₀,₃B₂O₃ x H₂O

in der x 3,3 bis 3,7 bedeutet, bevorzugt sind. Dieses Zinkborat ist im Wesentlichen bei den hohen Verarbeitungstemperaturen der teilaromatischen Polyamide stabil und neigt nur unwesentlich zur Abspaltung des Hydratwassers. Dementsprechend sind Zinkborate mit höherem Hydratwasseranteil im Allgemeinen nicht so gut als Synergist geeignet. Es können auch Mischungen von Metallboraten mit Metalloxiden eingesetzt werden, wobei das Mischungsverhältnis beliebig ist.

Bei den phosphorhaltigen Verbindungen der Komponente C) handelt es sich vorzugsweise um organische und anorganische Phosphor enthaltende Verbindungen, in denen der Phosphor die Wertigkeitsstufe -3 bis +5 besitzt. Unter der Wertigkeitsstufe soll der Begriff "Oxidationsstufe" verstanden werden, wie er im Lehrbuch der Anorganischen Chemie von A.F. Hollemann und E. Wiberg, Walter des Gruyter und Co. (1964, 57. bis 70. Auflage), Seite 166 bis 177, wiedergegeben ist. Phosphorverbindungen der Wertigkeitsstufen -3 bis +5 leiten sich von Phosphin (-3), Diphosphin (-2), Phosphinoxid (-1), elementarem Phosphor (+0), hypophosphoriger Säure (+1), phosphoriger Säure (+3), Hypodiphosphorsäure (+4) und Phosphorsäure (+5) ab.

Aus der großen Zahl von phosphorhaltigen Verbindungen seien nur einige Beispiele erwähnt.

Beispiele für Phosphorverbindungen der Phosphin-Klasse, die die Wertigkeitsstufe -3 aufweisen, sind aromatische Phosphine, wie Triphenylphosphin, Tritolylphosphin, Trinonylphosphin, Trinaphthylphosphin und Trisnonylphenylphosphin u.a. Besonders geeignet ist Triphenylphosphin.

Beispiele für Phosphorverbindungen der Diphosphinklasse, die die Wertigkeitsstufe -2 aufweisen, sind Tetraphenyldiphosphin, Tetranaphthyldiphosphin u.a.. Besonders geeignet ist Tetranaphthyldiphosphin.

Phosphorverbindungen der Wertigkeitsstufe -1 leiten sich vom Phosphinoxid ab.

Geeignet sind Phosphinoxide der allgemeinen Formel (III) 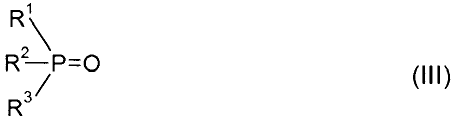 wobei R¹, R² und R³ gleiche oder verschiedene Alkyl-, Aryl-, Alkylaryl- oder Cycloalkylgruppen mit 8 bis 40 C-Atomen bedeuten.

Beispiele für Phosphinoxide sind Triphenylphosphinoxid, Tritolylphosphinoxid, Trisnonylphenylphosphinoxid, Tricyclohexylphosphinoxid, Tris-(n-butyl)-phosphinoxid, Tris-(n-hexyl)-phosphinoxid, Tris-(n-octyl)-phosphinoxid, Tris-(cyanoethyl)-phosphinoxid, Benzylbis-(cyclohexyl)-phosphinoxid, Benzylbisphenylphosphinoxid, Phenylbis-(n-hexyl)-phosphinoxid. Bevorzugt sind weiterhin oxidierte Umsetzungsprodukte aus Phosphin mit Aldehyden, insbesondere aus t-Butylphosphin mit Glyoxal. Besonders bevorzugt eingesetzt werden Triphenyl-phosphinoxid, Tricyclohexlyphosphinoxid, Tris-(n-öctyl)-phosphinoxid und Tris-(cyanoethyl)-phosphinoxid.

Ebenso geeignet ist Triphenylphosphinsulfid und dessen wie oben beschriebene Derivate der Phosphinoxide.

Phosphor der Wertigkeitsstufe +0 ist der elementare Phosphor. In Frage kommen roter und schwarzer Phosphor. Bevorzugt ist roter Phosphor.

Phosphorverbindungen der "Oxidationsstufe" +1 sind z.B. Hypophosphite rein organischer Natur, z.B. organische Hypophosphite, wie Cellulosehypophosphitester, Ester der hypophosphorigen Säuren mit Diolen, wie z.B. von 1,10-Dodecyldiol. Auch substituierte Phosphinsäuren und deren Anhydride, wie z.B. Diphenylphosphinsäure, können eingesetzt werden. Des Weiteren kommen in Frage Diphenylphosphinsäure, Di-p-Tolylphosphinsäure, Di-Kresylphosphinsäureanhydrid, Es kommen aber auch Verbindungen wie Hydrochinon-, Ethylenglykol-, Propylenglykol-bis(diphenylphosphinsäure)-ester u.a. in Frage. Ferner sind geeignet Aryl(Alkyl)phosphinsäureamide, wie z.B. Diphenylphosphinsäure-dimethylamid und Sulfonamidoaryl(alkyl)phosphinsäure-derivate, wie z.B. p-Tolylsulfonamidodiphenylphosphinsäure. Bevorzugt eingesetzt werden Hydrochinon- und Ethylenglykol-bis-(diphenylphosphinsäure)ester und das Bisdiphenylphosphinat des Hydrochinons.

Phosphorverbindungen der Oxidationsstufe +3 leiten sich von der phosphorigen Säure ab. Geeignet sind cyclische Phosphonate, die sich vom Pentaerythrit, Neopentylglykol oder Brenzkatechin ableiten wie z.B. 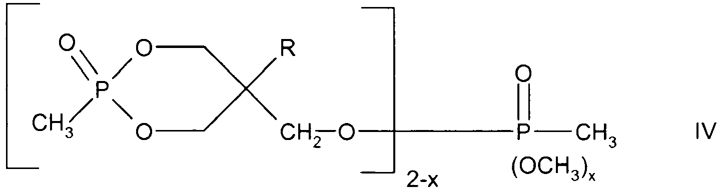 wobei R einen C₁ bis C₄-Alkylrest, bevorzugt Methylrest, x=0 oder 1 bedeutet (Amgard®) P 45 der Firma Albright & Wilson).

Ferner ist Phosphor der Wertigkeitsstufe +3 in Triaryl(alkyl)phosphiten, wie z.B. Triphenylphosphit, Tris(4-decylphenyl)phosphit, Tris(2,4-di-tert.-butylphenyl)phosphit oder Phenyldidecylphosphit u.a. enthalten. Es kommen aber auch Diphosphite, wie z.B. Propylenglykol-1,2-bis(diphosphit) oder cyclische Phosphite, die sich vom Pentaerythrit, Neopentylglykol oder Brenzkatechin ableiten, in Frage.

Besonders bevorzugt werden Methylneopentylglycolphosphonat und -phosphit sowie Dimethylpentaerythritdiphosphonat und -phosphit.

Als Phosphorverbindungen der Oxidationsstufe +4 kommen vor allem Hypodiphosphate, wie z.B. Tetraphenylhypodiphosphat oder Bisneopentylhypodiphosphat in Betracht.

Als Phosphorverbindungen der Oxidationsstufe +5 kommen vor allem alkyl- und arylsubstituierte Phosphate in Betracht. Beispiele sind Phenylbisdodecylphosphat, Phenylethylhydrogenphosphat, Phenyl-bis(3,5,5-trimethylhexyl)phosphat, Ethyldiphenylphosphat, 2-Ethylhexyldi(tolyl)phosphat, Diphenylhydrogenphosphat, Bis(2-ethylhexyl)-p-tolylphosphat, Tritolylphosphat, Bis(2-ethylhexyl)-phenylphosphat, Di(nonyl)phenylphosphat, Phenylmethylhydrogenphosphat, Di(dodecyl)-p-tolylphosphat, p-Tolyl-bis(2,5,5-trimethylhexyl)phosphat oder 2-Ethylhexyldiphenylphosphat. Besonders geeignet sind Phosphorverbindungen, bei denen jeder Rest ein Aryloxi-Rest ist. Ganz besonders geeignet ist Triphenylphosphat und Resorcinol-bis-(diphenylphosphat) und dessen kernsubstituierten Derivate der allgemeinen Formel V (RDP): 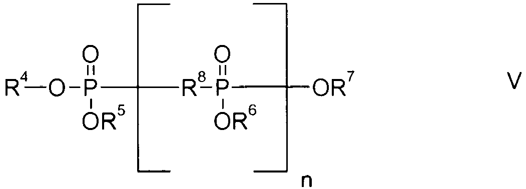 in der die Substituenten folgende Bedeutung haben:
- R⁴-R⁷: ein aromatischer Rest mit 6 bis 20 C-Atomen, bevorzugt ein Phenylrest, welcher mit Alkylgruppen mit 1 bis 4 C-Atomen bevorzugt Methyl, substituiert sein kann,
- R⁸: ein zweiwertiger Phenolrest, bevorzugt 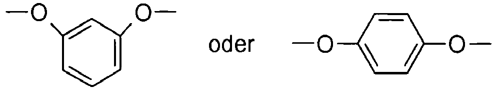
und n einen Durchschnittswert zwischen 0,1 bis 100, bevorzugt 0,5 bis 50, insbesondere 0,8 bis 10 und ganz besonders 1 bis 5.

Die im Handel erhältlichen RPD-Produkte unter dem Warenzeichen Fyroflex® oder Fyrol® -RDP (Akzo) sowie CR 733-S (Daihachi) sind bedingt durch das Herstellungsverfahren Gemische aus ca. 85 % RDP (n=1) mit ca. 2,5 % Triphenylphosphat sowie ca. 12,5 % oligomeren Anteilen, in denen der Oligomerisierungsgrad meist kleiner 10 beträgt.

Des Weiteren können auch cyclische Phosphate eingesetzt werden. Besonders geeignet ist hierbei Diphenylpentaerythritdiphosphat und Phenylneopentylphosphat.

Außer den oben angeführten niedermolekularen Phosphorverbindungen kommen noch oligomere und polymere Phosphorverbindungen in Frage.

Solche polymeren, halogenfreien organischen Phosphorverbindungen mit Phosphor in der Polymerkette entstehen beispielsweise bei der Herstellung von pentacyclischen, ungesättigten Phosphindihalogeniden, wie beispielsweise in der DE-A 20 36 173 beschrieben ist. Das Molekulargewicht gemessen durch Dampfdruckosmometrie in Dimethylformamid, der Polyphospholinoxide soll im Bereich von 500 bis 7000, vorzugsweise im Bereich von 700 bis 2000 liegen.

Der Phosphor besitzt hierbei die Oxidationsstufe -1.

Ferner können anorganische Koordinationspolymere von Aryl(alkyl)-phosphinsäuren wie z.B. Poly-β-natrium(I)-methylphenylphosphinat eingesetzt werden. Ihre Herstellung wird in DE-A 31 40 520 angegeben. Der Phosphor besitzt die Oxidationszahl +1.

Weiterhin können solche halogenfreien polymeren Phosphorverbindungen durch die Reaktion eines Phosphonsäurechlorids, wie z.B. Phenyl-, Methyl-, Propyl-, Styryl- und Vinylphosphonsäuredichlorid mit bifunktionellen Phenolen, wie z.B. Hydrochinon, Resorcin, 2,3,5-Trimethylhydrochinon, Bisphenol-A, Tetramethylbiphenol-A entstehen.

Weitere halogenfreie polymere Phosphorverbindungen, die in den erfindungsgemäßen Formmassen enthalten sein können, werden durch Reaktion von phosphoroxidtrichlorid oder Phosphorsäureesterdichloriden mit einem Gemisch aus mono-, bi- und trifunktionellen Phenolen und anderen Hydroxylgruppen tragenden Verbindungen hergestellt (vgl. Houben-Weyl-Müller, Thieme-Verlag Stuttgart, Organische Phosphorverbindungen Teil II (1963)). Ferner können polymere Phosphonate durch Umesterungsreaktionen von Phosphonsäureestern mit bifunktionellen Phenolen (vgl. DE-A 29 25 208) oder durch Reaktionen von Phosphonsäureestern mit Diaminen oder Diamiden oder Hydraziden (vgl. US-PS 4 403 075) hergestellt werden. In Frage kommt aber auch das anorganische Poly(ammoniumphosphat).

Es können auch oligomere Pentaerythritphosphite, -phosphate und -phosphonate gemäß EP-B 8 486, z.B. Mobil Antiblaze® 19 (eingetragenes Warenzeichen der Firma Mobil Oil) verwendet werden.

Weiterhin bevorzugt sind Phosphorverbindungen der allgemeinen Formel VI 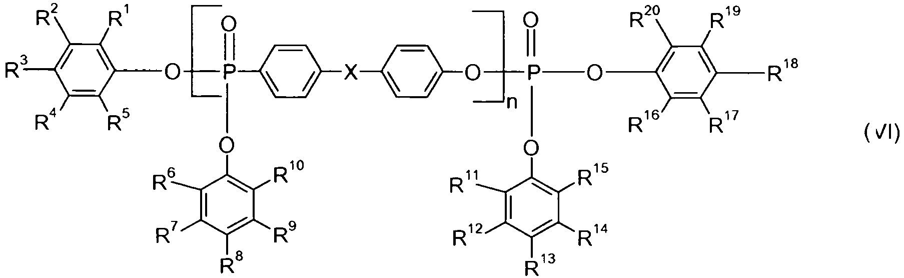 in der die Substituenten folgende Bedeutung haben:
- R¹ bis R²⁰: unabhängig voneinander Wasserstoff, eine lineare oder verzweigte Alkylgruppe bis zu 6 C-Atomen
- n: einen Durchschnittswert von 0,5 bis 50 und
- X: eine Einfachbindung, C=O, S, SO₂, C(CH₃)2.

Bevorzugte Verbindungen C) sind solche, in denen R1 bis R²⁰ unabhängig voneinander Wasserstoff und/oder einen Methylrest bedeuten. Für den Fall, dass R¹ bis R²⁰ unabhängig voneinander einen Methylrest bedeuten, sind solche Verbindungen C) bevorzugt, in welchen die Reste R¹, R⁵, R⁶, R¹⁰, R¹¹, R¹⁵, R¹⁶, R²⁰ in ortho-Stellung zum Sauerstoff der Phosphatgruppe mindestens einen Methylrest darstellen. Weiterhin bevorzugt sind Verbindungen C) in denen pro aromatischem Ring eine Methylgruppe, vorzugsweise in ortho-Stellung vorhanden ist und die anderen Reste Wasserstoff bedeuten.

Insbesondere bevorzugt sind als Substituenten SO₂ und S, sowie ganz besonders bevorzugt C(CH₃)₂ für X in obiger Formel (VI).

n beträgt vorzugsweise als Durchschnittswert 0,5 bis 5, insbesondere 0,7 bis 2 und insbesondere ≈ 1.

Die Angabe von n als Durchschnittswert ergibt sich durch das Herstellverfahren der oben aufgeführten Verbindungen, so dass der Oligomerisierungsgrad meist kleiner 10 beträgt und geringe Anteile (meist < 5 Gew.-%) an Triphenylphosphat enthalten sind, wobei dies von Charge zu Charge unterschiedlich ist. Die Verbindungen C) sind als CR - 741 der Firma Daihachi im Handel erhältlich.

Weiterhin sind P-N-Kondensate geeignet, insbesondere solche, wie sie in der WO 2002/96976 beschrieben sind.

Insbesondere bevorzugte Kombinationen C) sind Mischungen von phosphor- und stickstoffhaltigen Verbindungen, wobei Mischungsverhältnisse von 1:10 bis 10:1, bevorzugt 1:9 bis 9:1 bevorzugt sind.

Als Komponente D) können die erfindungsgemäßen Formmassen bis zu 70, vorzugsweise bis zu 50 Gew.-% weiterer Zusatzstoffe enthalten.

Als faser- oder teilchenförmige Füllstoffe D1) seien Kohlenstofffasern, Glasfasern, Glaskugeln, amorphe Kieselsäure, Calciumsilicat, Calciummetasilicat, Magnesiumcarbonat, Kaolin, Kreide, gepulverter Quarz, Glimmer, Bariumsulfat und Feldspat genannt, die in Mengen von 1 bis 50 Gew.-%, insbesondere 1 bis 40, vorzugsweise 10 bis 40 Gew.-% eingesetzt werden.

Als bevorzugte faserförmige Füllstoffe seien Kohlenstofffasern, Aramid-Fasern und Kaliumtitanat-Fasern genannt, wobei Glasfasern als E-Glas besonders bevorzugt sind. Diese können als Rovings oder Schnittglas in den handelsüblichen Formen eingesetzt werden.

Die faserförmigen Füllstoffe können zur besseren Verträglichkeit mit dem Thermoplasten mit einer Silanverbindung oberflächlich vorbehandelt sein.

Geeignete Silanverbindungen sind solche der allgemeinen Formel

(X-(CH₂)ₙ)ₖ-Si-(O-CₘH₂ₘ₊₁)4-k

in der die Substituenten folgende Bedeutung haben:

X NH₂-,

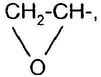

HO-,

- n: eine ganze Zahl von 2 bis 10, bevorzugt 3 bis 4
- m: eine ganze Zahl von 1 bis 5, bevorzugt 1 bis 2
- k: eine ganze Zahl von 1 bis 3, bevorzugt 1

Bevorzugte Silanverbindungen sind Aminopropyltrimethoxysilan, Aminobutyltrimethoxysilan, Aminopropyltriethoxysilan, Aminobutyltriethoxysilan sowie die entsprechenden Silane, welche als Substituent X eine Glycidylgruppe enthalten.

Die Silanverbindungen werden im Allgemeinen in Mengen von 0,01 bis 2, vorzugsweise 0,025 bis 1,0 und insbesondere 0,05 bis 0,5 Gew.-% (bezogen auf E)) zur Oberflächenbeschichtung eingesetzt.

Geeignet sind auch nadelförmige mineralische Füllstoffe.

Unter nadelförmigen mineralischen Füllstoffen wird im Sinne der Erfindung ein mineralischer Füllstoff mit stark ausgeprägtem nadelförmigen Charakter verstanden. Als Beispiel sei nadelförmiger Wollastonit genannt. Vorzugsweise weist das Mineral ein UD-(Länge Durchmesser)-Verhältnis von 8 : 1 bis 35 : 1, bevorzugt von 8 : 1 bis 11 : 1 auf. Der mineralische Füllstoff kann gegebenenfalls mit den vorstehend genannten Silanverbindungen vorbehandelt sein; die Vorbehandlung ist jedoch nicht unbedingt erforderlich.

Als weitere Füllstoffe seien Kaolin, calciniertes Kaolin, Wollastonit, Talkum und Kreide genannt sowie zusätzlich plättchen- oder nadelförmige Nanofüllstoffe bevorzugt in Mengen zwischen 0,1 und 10 %. Bevorzugt werden hierfür Böhmit, Bentonit, Montmorillonit, Vermicullit, Hektorit und Laponit eingesetzt. Um eine gute Verträglichkeit der plättchenförmigen Nanofüllstoffe mit dem organischen Bindemittel zu erhalten, werden die plättchenförmigen Nanofüllstoffe nach dem Stand der Technik organisch modifiziert. Der Zusatz der plättchen- oder nadelförmigen Nanofüllstoffe zu den erfindungsgemäßen Nanokompositen führt zu einer weiteren Steigerung der mechanischen Festigkeit.

Als Komponente D2) können die erfindungsgemäßen Formmassen 0,05 bis 3, vorzugsweise 0,1 bis 1,5 und insbesondere 0,1 bis 1 Gew.-% eines Schmiermittels enthalten.

Bevorzugt sind Al-, Alkali-, Erdalkalisalze oder Ester oder Amide von Fettsäuren mit 10 bis 44 C-Atomen, vorzugsweise mit 12 bis 44 C-Atomen.

Die Metallionen sind vorzugsweise Erdalkali und Al, wobei Ca oder Mg besonders bevorzugt sind.

Bevorzugte Metallsalze sind Ca-Stearat und Ca-Montanat sowie Al-Stearat und eine Mischung aus Al-distearat mit Al-tristearat (Alugel® 30DF der Firma Baerlocher).

Es können auch Mischungen verschiedener Salze eingesetzt werden, wobei das Mischungsverhältnis beliebig ist.

Die Carbonsäuren können 1- oder 2-wertig sein. Als Beispiele seien Pelargonsäure, Palmitinsäure, Laurinsäure, Margarinsäure, Dodecandisäure, Behensäure und besonders bevorzugt Stearinsäure, Caprinsäure sowie Montansäure (Mischung von Fettsäuren mit 30 bis 40 C-Atomen) genannt.

Die aliphatischen Alkohole können 1- bis 4-wertig sein. Beispiele für Alkohole sind n-Butanol, n-Octanol, Stearylalkohol, Ethylenglykol, Propylenglykol, Neopentylglykol, Pentaerythrit, wobei Glycerin und Pentaerythrit bevorzugt sind.

Die aliphatischen Amine können 1- bis 3-wertig sein. Beispiele hierfür sind Stearylamin, Ethylendiamin, Propylendiamin, Hexamethylendiamin, Di(6-Aminohexyl)amin, wobei Ethylendiamin und Hexamethylendiamin besonders bevorzugt sind. Bevorzugte Ester oder Amide sind entsprechend Glycerindistearat, Glycerintristearat, Ethylendiamindistearat, Glycerinmonopalmitat, Glycerintrilaurat, Glycerinmonobehenat und Pentaerythrittetrastearat.

Es können auch Mischungen verschiedener Ester oder Amide oder Ester mit Amiden in Kombination eingesetzt werden, wobei das Mischungsverhältnis beliebig ist.

Als Komponente D3) können die erfindungsgemäßen Formmassen 0,05 bis 3, vorzugsweise 0,1 bis 1,5 und insbesondere 0,1 bis 1 Gew.-% eines Cu-Stabilisators, vorzugsweise eines Cu-(I)-Halogenids, insbesondere in Mischung mit einem Alkalihalogenid, vorzugsweise KJ, insbesondere im Verhältnis 1 : 4., oder eines sterisch gehinderten Phenols oder deren Mischungen enthalten.

Als Salze des einwertigen Kupfers kommen vorzugsweise Kupfer(I)-Acetat, Kupfer(I)-Chlorid, -Bromid und -Jodid in Frage. Diese sind in Mengen von 5 bis 500 ppm Kupfer, vorzugsweise 10 bis 250 ppm, bezogen auf Polyamid, enthalten.

Die vorteilhaften Eigenschaften werden insbesondere erhalten, wenn das Kupfer in molekularer Verteilung im Polyamid vorliegt. Dies wird erreicht, wenn man der Formmasse ein Konzentrat zusetzt, das Polyamid, ein Salz des einwertigen Kupfers und ein Alkalihalogenid in Form einer festen, homogenen Lösung enthält. Ein typisches Konzentrat besteht z.B. aus 79 bis 95 Gew.-% Polyamid und 21 bis 5 Gew.-% eines Gemisches aus Kupferjodid oder -bromid und Kaliumjodid. Die Konzentration der festen homogenen Lösung an Kupfer liegt bevorzugt zwischen 0,3 und 3, insbesondere zwischen 0,5 und 2 Gew.-%, bezogen auf das Gesamtgewicht der Lösung und das molare Verhältnis von Kupfer(I)-Jodid zu Kaliumjodid liegt zwischen 1 und 11,5, vorzugsweise zwischen 1 und 5.

Geeignete Polyamide für das Konzentrat sind Homopolyamide und Copolyamide, insbesondere Polyamid 6 und Polyamid 6.6.

Als sterisch gehinderte Phenole D3) eignen sich prinzipiell alle Verbindungen mit phenolischer Struktur, die am phenolischen Ring mindestens eine sterisch anspruchsvolle Gruppe aufweisen.

Vorzugsweise kommen z.B. Verbindungen der Formel 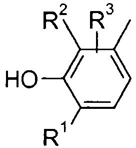 in Betracht, in der bedeuten:
R¹ und R² eine Alkylgruppe, eine substituierte Alkylgruppe oder eine substituierte Triazolgruppe, wobei die Reste R¹ und R² gleich oder verschieden sein können und R³ eine Alkylgruppe, eine substituierte Alkylgruppe, eine Alkoxigruppe oder eine substituierte Aminogruppe.

Antioxidantien der genannten Art werden beispielsweise in der DE-A 27 02 661 (US-A 4 360 617) beschrieben.

Eine weitere Gruppe bevorzugter sterisch gehinderter Phenole leiten sich von substituierten Benzolcarbonsäuren ab, insbesondere von substituierten Benzolpropionsäuren.

Besonders bevorzugte Verbindungen aus dieser Klasse sind Verbindungen der Formel 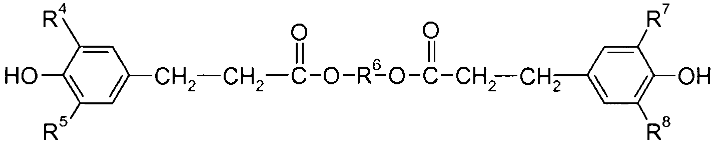 wobei R⁴, R⁵, R⁷ und R⁸ unabhängig voneinander C₁-C₈-Alkylgruppen darstellen, die ihrerseits substituiert sein können (mindestens eine davon ist eine sterisch anspruchsvolle Gruppe) und R⁶ einen zweiwertigen aliphatischen Rest mit 1 bis 10 C-Atomen bedeutet, der in der Hauptkette auch C-O-Bindungen aufweisen kann.

Bevorzugte Verbindungen, die diesen Formeln entsprechen, sind 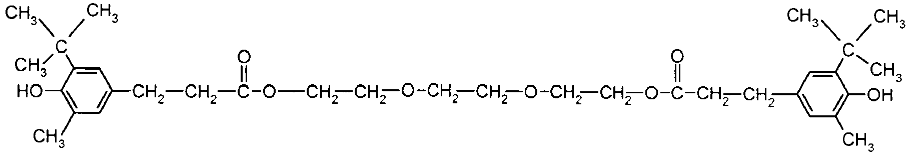 (Irganox® 245 der Firma Ciba-Geigy 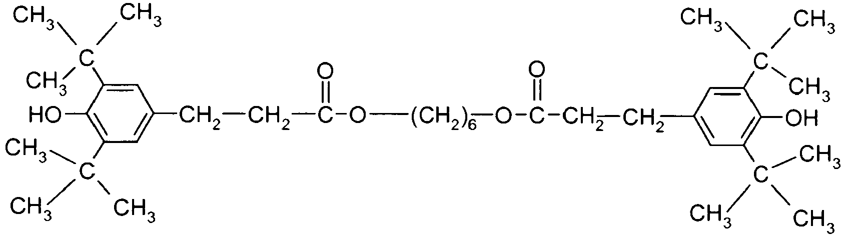 (Irganox® 259 der Firma Ciba-Geigy)

Beispielhaft genannt seien insgesamt als sterisch gehinderte Phenole:
2,2'-Methylen-bis-(4-methyl-6-tert.-butylphenol), 1,6-Hexandiol-bis[3-(3,5-di-tert.-butyl-4-hydroxyphenyl)-propionat), Pentaerythrityl-tetrakis-[3-(3,5-di-tert.-butyl-4-hydroxyphenol)-propionat], Distearyl-3,5-di-tert.-butyl-4-hydroxybenzylphosphonat, 2,6,7-Trioxa-1-phosphabicyclo-[2.2.2]oct-4-yl-methyl-3,5-di-tert.-butyl-4-hydroxyhydrocinnamat, 3,5-Di-tert.-butyl-4-hydroxyphenyl-3,5-distearyl-thiotriazylamin, 2-(2'-Hydroxy-3'-hydroxy-3',5'-di-tert.-butylphenyl)-5-chlorbenzotriazol, 2,6-Di-tert.-butyl-4-hydroxymethylphenol, 1,3,5-Trimethyl-2,4,6-tris-(3,5-di-tert.-butyl-4-hydroxybenzyl)-benzol, 4,4'-Methylen-bis-(2,6-di-tert.-butylphenol), 3,5-Di-tert.-butyl-4-hydroxybenzyldimethylamin.

Als besonders wirksam erwiesen haben sich und daher vorzugsweise verwendet werden 2,2'-Methylen-bis-(4-methyl-6-tert.-butylphenyl), 1,6-Hexandiol-bis-(3,5-di-tert.-butyl-4-hydroxyphenyl]-propionat (Irganox® 259), Pentaerythrityl-tetrakis-[3-(3,5-di-tert.-butyl-4-hydroxyphenyl)-propionat] sowie N,N'-Hexamethylen-bis-3,5-di-tert.-butyl-4-hydroxyhydrocinnamid (Irganox® 1098) und das vorstehend beschriebene Irganox® 245 der Firma Ciba Geigy, das besonders gut geeignet ist.

Die Antioxidantien D), die einzeln oder als Gemische eingesetzt werden können, sind in einer Menge von 0,05 bis zu 3 Gew.-%, vorzugsweise von 0,1 bis 1,5 Gew.-%, insbesondere 0,1 bis 1 Gew.-%, bezogen auf das Gesamtgewicht der Formmassen A) bis D) enthalten.

In manchen Fällen haben sich sterisch gehinderte Phenole mit nicht mehr als einer sterisch gehinderten Gruppe in ortho-Stellung zur phenolischen Hydroxygruppe als besonders vorteilhaft erwiesen; insbesondere bei der Beurteilung der Farbstabilität bei Lagerung in diffusem Licht über längere Zeiträume.

Als Komponente D4) können die erfindungsgemäßen Formmassen 0,05 bis 5, vorzugsweise 0,1 bis 2 und insbesondere 0,25 bis 1 Gew.-% eines Nigrosins enthalten.

Unter Nigrosinen versteht man im allgemeinen eine Gruppe von schwarzen oder grauen, mit den Indulinen verwandten Phenazin-Farbstoffen (Azin-Farbstoffen) in verschiedenen Ausführungsformen (wasserlöslich, fettlöslich, spritlöslich), die bei Wollfärberei und -druck, beim Schwarzfärben von Seiden, zum Färben von Leder, Schuhcremes, Firnissen, Kunststoffen, Einbrennlacken, Tinten und dergleichen, sowie als Mikroskopiefarbstoffe Verwendung finden.

Man gewinnt die Nigrosine technisch durch Erhitzen von Nitrobenzol, Anilin und salzsaurem Anilin mit metall. Eisen und FeCl₃ (Name von lateinischem niger = schwarz).

Die Komponente D4) kann als freie Base oder auch als Salz (z.B. Hydrochlorid) eingesetzt werden.

Weitere Einzelheiten zu Nigrosinen sind beispielsweise dem elektronischen Lexikon Römpp Online, Version 2.8, Thieme-Verlag Stuttgart, 2006, Stichwort "Nigrosin" zu entnehmen.

Weitere übliche Zusatzstoffe D) sind beispielsweise in Mengen bis zu 25, vorzugsweise bis zu 20 Gew.-% kautschukelastische Polymerisate (oft auch als Schlagzähmodifier, Elastomere oder Kautschuke bezeichnet).

Ganz allgemein handelt es sich dabei um Copolymerisate die bevorzugt aus mindestens zwei der folgenden Monomeren aufgebaut sind: Ethylen, Propylen, Butadien, Isobuten, Isopren, Chloropren, Vinylacetat, Styrol, Acrylnitril und Acryl- bzw. Methacrylsäureester mit 1 bis 18 C-Atomen in der Alkoholkomponente.

Derartige Polymere werden z.B. in Houben-Weyl, Methoden der organischen Chemie, Bd. 14/1 (Georg-Thieme-Verlag, Stuttgart, 1961). Seiten 392 bis 406 und in der Monographie von C.B. Bucknall, "Toughened Plastics" (Applied Science Publishers, London, 1977) beschrieben.

Im Folgenden werden einige bevorzugte Arten solcher Elastomerer vorgestellt.

Bevorzugte Arten von solchen Elastomeren sind die sog. Ethylen-Propylen (EPM) bzw. Ethylen-Propylen-Dien-(EPDM)-Kautschuke.

EPM-Kautschuke haben im Allgemeinen praktisch keine Doppelbindungen mehr, während EPDM-Kautschuke 1 bis 20 Doppelbindungen/100 C-Atome aufweisen können.

Als Dien-Monomere für EPDM-Kautschuke seien beispielsweise konjugierte Diene wie Isopren und Butadien, nicht-konjugierte Diene mit 5 bis 25 C-Atomen wie Penta-1,4-dien, Hexa-1,4-dien, Hexa-1,5-dien, 2,5-Dimethylhexa-1,5-dien und Octa-1,4-dien, cyclische Diene wie Cyclopentadien, Cyclohexadiene, Cyclooctadiene und Dicyclopentadien sowie Alkenylnorbornene wie 5-Ethyliden-2-norbornen, 5-Butyliden-2-norbornen, 2-Methallyl-5-norbornen, 2-Isopropenyl-5-norbornen und Tricyclodiene wie 3-Methyl-tricyclo(5.2.1.0.2.6)-3,8-decadien oder deren Mischungen genannt. Bevorzugt werden Hexa-1,5-dien, 5-Ethylidennorbornen und Dicyclopentadien. Der Diengehalt der EPDM-Kautschuke beträgt vorzugsweise 0,5 bis 50, insbesondere 1 bis 8 Gew.-%, bezogen auf das Gesamtgewicht des Kautschuks.

EPM- bzw. EPDM-Kautschuke können vorzugsweise auch mit reaktiven Carbonsäuren oder deren Derivaten gepfropft sein. Hier seien z.B. Acrylsäure, Methacrylsäure und deren Derivate, z.B. Glycidyl(meth)acrylat, sowie Maleinsäureanhydrid genannt.

Eine weitere Gruppe bevorzugter Kautschuke sind Copolymere des Ethylens mit Acrylsäure und/oder Methacrylsäure und/oder den Estern dieser Säuren. Zusätzlich können die Kautschuke noch Dicarbonsäuren wie Maleinsäure und Fumarsäure oder Derivate dieser Säuren, z.B. Ester und Anhydride, und/oder Epoxy-Gruppen enthaltende Monomere enthalten. Diese Dicarbonsäurederivate bzw. Epoxygruppen enthaltende Monomere werden vorzugsweise durch Zugabe von Dicarbonsäure- bzw. Epoxygruppen enthaltenden Monomeren der allgemeinen Formeln I oder II oder III oder IV zum Monomerengemisch in den Kautschuk eingebaut

R¹C(COOR²)=C(COOR³)R⁴ (I)

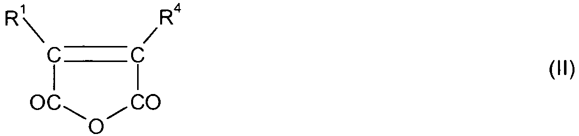

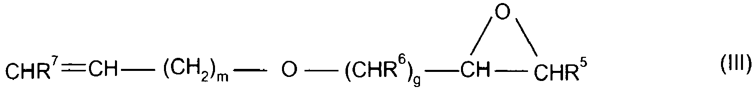

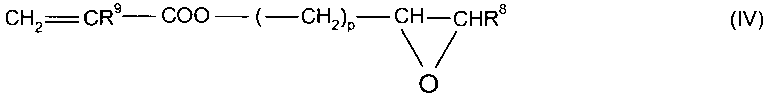

wobei R¹ bis R⁹ Wasserstoff oder Alkylgruppen mit 1 bis 6 C-Atomen darstellen und m eine ganze Zahl von 0 bis 20, g eine ganze Zahl von 0 bis 10 und p eine ganze Zahl von 0 bis 5 ist.

Vorzugsweise bedeuten die Reste R¹ bis R⁹ Wasserstoff, wobei m für 0 oder 1 und g für 1 steht. Die entsprechenden Verbindungen sind Maleinsäure, Fumarsäure, Maleinsäureanhydrid, Allylglycidylether und Vinylglycidylether.

Bevorzugte Verbindungen der Formeln I, II and IV sind Maleinsäure, Maleinsäureanhydrid und Epoxygruppen-enthaltende Ester der Acrylsäure und/oder Methacrylsäure, wie Glycidylacrylat, Glycidylmethacrylat und die Ester mit tertiären Alkoholen, wie t-Butylacrylat. Letztere weisen zwar keine freien Carboxylgruppen auf, kommen in ihrem Verhalten aber den freien Säuren nahe und werden deshalb als Monomere mit latenten Carboxylgruppen bezeichnet.

Vorteilhaft bestehen die Copolymeren aus 50 bis 98 Gew.-% Ethylen, 0,1 bis 20 Gew.-% Epoxygruppen enthaltenden Monomeren und/oder Methacrylsäure und/oder Säure-anhydridgruppen enthaltenden Monomeren sowie der restlichen Menge an (Meth)acrylsäureestern.

Besonders bevorzugt sind Copolymerisate aus

| | |
|---|---|
| 50 bis 98, | insbesondere 55 bis 95 Gew.-% Ethylen, |
| 0,1 bis 40, | insbesondere 0,3 bis 20 Gew.-% Glycidylacrylat und/oder Glycidylmethacrylat, (Meth)acrylsäure und/oder Maleinsäureanhydrid, und |
| 1 bis 45, | insbesondere 5 bis 40 Gew.-% n-Butylacrylat und/oder 2-Ethylhexyl-acrylat. |

Weitere bevorzugte Ester der Acryl- und/oder Methacrylsäure sind die Methyl-, Ethyl-, Propyl- und i- bzw. t-Butylester.

Daneben können auch Vinylester und Vinylether als Comonomere eingesetzt werden.

Die vorstehend beschriebenen Ethylencopolymeren können nach an sich bekannten Verfahren hergestellt werden, vorzugsweise durch statistische Copolymerisation unter hohem Druck und erhöhter Temperatur. Entsprechende Verfahren sind allgemein bekannt.

Bevorzugte Elastomere sind auch Emulsionspolymerisate, deren Herstellung z.B. bei Blackley in der Monographie "Emulsion Polymerization" beschrieben wird. Die verwendbaren Emulgatoren und Katalysatoren sind an sich bekannt.

Grundsätzlich können homogen aufgebaute Elastomere oder aber solche mit einem Schalenaufbau eingesetzt werden. Der schalenartige Aufbau wird durch die Zugabereihenfolge der einzelnen Monomeren bestimmt; auch die Morphologie der Polymeren wird von dieser Zugabereihenfolge beeinflusst.

Nur stellvertretend seien hier als Monomere für die Herstellung des Kautschukteils der Elastomeren Acrylate wie z.B. n-Butylacrylat und 2-Ethylhexylacrylat, entsprechende Methacrylate, Butadien und Isopren sowie deren Mischungen genannt. Diese Monomeren können mit weiteren Monomeren wie z.B. Styrol, Acrylnitril, Vinylethern und weiteren Acrylaten oder Methacrylaten wie Methylmethacrylat, Methylacrylat, Ethylacrylat und Propylacrylat copolymerisiert werden.

Die Weich- oder Kautschukphase (mit einer Glasübergangstemperatur von unter 0°C) der Elastomeren kann den Kern, die äußere Hülle oder eine mittlere Schale (bei Elastomeren mit mehr als zweischaligem Aufbau) darstellen; bei mehrschaligen Elastomeren können auch mehrere Schalen aus einer Kautschukphase bestehen.

Sind neben der Kautschukphase noch eine oder mehrere Hartkomponenten (mit Glasübergangstemperaturen von mehr als 20°C) am Aufbau des Elastomeren beteiligt, so werden diese im allgemeinen durch Polymerisation von Styrol, Acrylnitril, Methacrylnitril, α-Methylstyrol, p-Methylstyrol, Acrylsäureestern und Methacrylsäureestern wie Methylacrylat, Ethylacrylat und Methylmethacrylat als Hauptmonomeren hergestellt. Daneben können auch hier geringere Anteile an weiteren Comonomeren eingesetzt werden.

In einigen Fällen hat es sich als vorteilhaft herausgestellt, Emulsionspolymerisate einzusetzen, die an der Oberfläche reaktive Gruppen aufweisen. Derartige Gruppen sind z.B. Epoxy-, Carboxyl-, latente Carboxyl-, Amino- oder Amidgruppen sowie funktionelle Gruppen, die durch Mitverwendung von Monomeren der allgemeinen Formel 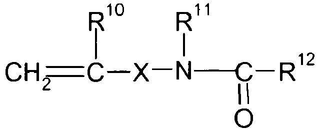 eingeführt werden können,
wobei die Substituenten folgende Bedeutung haben können:
- R¹⁰: Wasserstoff oder eine C₁- bis C₄-Alkylgruppe,
- R¹¹: Wasserstoff, eine C₁- bis C₈-Alkylgruppe oder eine Arylgruppe, insbesondere Phenyl,
- R¹²: Wasserstoff, eine C₁- bis C₁₀-Alkyl-, eine C₆- bis C₁₂-Arylgruppe oder -OR¹³
- R¹³: eine C₁- bis C₈-Alkyl- oder C₆- bis C₁₂₋Arylgruppe, die gegebenenfalls mit O- oder N-haltigen Gruppen substituiert sein können,
- X: eine chemische Bindung, eine C₁- bis C₁₀-Alkylen- oder C₆-C₁₂-Arylengruppe oder 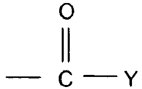
- Y: O-Z oder NH-Z und
- z: Z eine C₁- bis C₁₀-Alkylen- oder C₆- bis C₁₂-Arylengruppe.

Auch die in der EP-A 208 187 beschriebenen Pfropfmonomeren sind zur Einführung reaktiver Gruppen an der Oberfläche geeignet.

Als weitere Beispiele seien noch Acrylamid, Methacrylamid und substituierte Ester der Acrylsäure oder Methacrylsäure wie (N-t-Butylamino)-ethylmethacrylat, (N,N-Dimethylamino)ethylacrylat, (N,N-Dimethylamino)-methylacrylat und (N,N-Diethylamino)ethylacrylat genannt.

Weiterhin können die Teilchen der Kautschukphase auch vernetzt sein. Als Vernetzer wirkende Monomere sind beispielsweise Buta-1,3-dien, Divinylbenzol, Diallylphthalat und Dihydrodicyclopentadienylacrylat sowie die in der EP-A 50 265 beschriebenen Verbindungen.

Ferner können auch sogenannte pfropfvernetzende Monomere (graft-linking monomers) verwendet werden, d.h. Monomere mit zwei oder mehr polymerisierbaren Doppelbindungen, die bei der Polymerisation mit unterschiedlichen Geschwindigkeiten reagieren. Vorzugsweise werden solche Verbindungen verwendet, in denen mindestens eine reaktive Gruppe mit etwa gleicher Geschwindigkeit wie die übrigen Monomeren polymerisiert, während die andere reaktive Gruppe (oder reaktive Gruppen) z.B. deutlich langsamer polymerisiert (polymerisieren). Die unterschiedlichen Polymerisationsgeschwindigkeiten bringen einen bestimmten Anteil an ungesättigten Doppelbindungen im Kautschuk mit sich. Wird anschließend auf einen solchen Kautschuk eine weitere Phase aufgepfropft, so reagieren die im Kautschuk vorhandenen Doppelbindungen zumindest teilweise mit den Pfropfmonomeren unter Ausbildung von chemischen Bindungen, d.h. die aufgepfropfte Phase ist zumindest teilweise über chemische Bindungen mit der Pfropfgrundlage verknüpft.

Beispiele für solche pfropfvernetzende Monomere sind Allylgruppen enthaltende Monomere, insbesondere Allylester von ethylenisch ungesättigten Carbonsäuren wie Allylacrylat, Allylmethacrylat, Diallylmaleat, Diallylfumarat, Diallylitaconat oder die entsprechenden Monoallylverbindungen dieser Dicarbonsäuren. Daneben gibt es eine Vielzahl weiterer geeigneter pfropfvemetzender Monomerer; für nähere Einzelheiten sei hier beispielsweise auf die US-PS 4 148 846 verwiesen.

Im Allgemeinen beträgt der Anteil dieser vernetzenden Monomeren an dem schlagzäh modifizierenden Polymer bis zu 5 Gew.-%, vorzugsweise nicht mehr als 3 Gew.-%, bezogen auf das schlagzäh modifizierende Polymere.

Nachfolgend seien einige bevorzugte Emulsionspolymerisate aufgeführt. Zunächst sind hier Pfropfpolymerisate mit einem Kern und mindestens einer äußeren Schale zu nennen, die folgenden Aufbau haben:

| Typ | Monomere für den Kern | Monomere für die Hülle |
|---|---|---|
| I | Buta-1,3-dien, Isopren, n-Butylacrylat, Ethylhexylacrylat oder deren Mischungen | Styrol, Acrylnitril, Methylmethacrylat |
| II | wie I aber unter Mitverwendung von Vernetzern | wie I |
| III | wie I oder II | n-Butylacrylat, Ethylacrylat, Methylacrylat, Buta-1,3-dien, Isopren, Ethylhexyl-acrylat |
| IV | wie I oder II | wie I oder III aber unter Mitverwendung von Monomeren mit reaktiven Gruppen wie hierin beschrieben |
| V | Styrol, Acrylnitril, Methylmethacrylat oder deren Mischungen | erste Hülle aus Monomeren wie unter I und II für den Kern beschrieben zweite Hülle wie unter I oder IV für die Hülle beschrieben |

Anstelle von Pfropfpolymerisaten mit einem mehrschaligen Aufbau können auch homogene, d.h. einschalige Elastomere aus Buta-1,3-dien, Isopren und n-Butylacrylat oder deren Copolymeren eingesetzt werden. Auch diese Produkte können durch Mitverwendung von vernetzenden Monomeren oder Monomeren mit reaktiven Gruppen hergestellt werden.

Beispiele für bevorzugte Emulsionspolymerisate sind n-Butylacrylat/(Meth)acrylsäure-Copolymere, n-Butylacrylat/Glycidylacrylat- oder n-Butylacrylat/Glycidylmethacrylat-Copolymere, Pfropfpolymerisate mit einem inneren Kern aus n-Butylacrylat oder auf Butadienbasis und einer äußeren Hülle aus den vorstehend genannten Copolymeren und Copolymere von Ethylen mit Comonomeren, die reaktive Gruppen liefern.

Die beschriebenen Elastomere können auch nach anderen üblichen Verfahren, z.B. durch Suspensionspolymerisation, hergestellt werden.

Siliconkautschuke, wie in der DE-A 37 25 576, der EP-A 235 690, der DE-A 38 00 603 und der EP-A 319 290 beschrieben, sind ebenfalls bevorzugt.

Selbstverständlich können auch Mischungen der vorstehend aufgeführten Kautschuktypen eingesetzt werden.

Als Komponente D) können die erfindungsgemäßen thermoplastischen Formmassen übliche Verarbeitungshilfsmittel wie Stabilisatoren, Oxidationsverzögerer, Mittel gegen Wärmezersetzung und Zersetzung durch ultraviolettes Licht, Gleit- und Entformungsmittel, Färbemittel wie Farbstoffe und Pigmente, Keimbildungsmittel, Weichmacher, usw. enthalten.

Als Beispiele für Oxidationsverzögerer und Wärmestabilisatoren sind sterisch gehinderte Phenole und/oder Phosphite und Amine (z.B. TAD), Hydrochinone, aromatische sekundäre Amine wie Diphenylamine, verschiedene substituierte Vertreter dieser Gruppen und deren Mischungen in Konzentrationen bis zu 1 Gew.-%, bezogen auf das Gewicht der thermoplastischen Formmassen genannt.

Als UV-Stabilisatoren, die im Allgemeinen in Mengen bis zu 2 Gew.-%, bezogen auf die Formmasse, verwendet werden, seien verschiedene substituierte Resorcine, Salicylate, Benzotriazole und Benzophenone genannt.

Es können anorganische Pigmente, wie Titandioxid, Ultramarinblau, Eisenoxid und Ruß, weiterhin organische Pigmente, wie Phthalocyanine, Chinacridone, Perylene sowie Farbstoffe, wie Anthrachinone als Farbmittel zugesetzt werden.

Als Keimbildungsmittel können Natriumphenylphosphinat, Aluminiumoxid, Siliziumdioxid sowie bevorzugt Talkum eingesetzt werden.

Die erfindungsgemäßen thermoplastischen Formmassen können nach an sich bekannten Verfahren hergestellt werden, in dem man die Ausgangskomponenten in üblichen Mischvorrichtungen wie Schneckenextrudern, Brabender-Mühlen oder Banbury-Mühlen mischt und anschließend extrudiert. Nach der Extrusion kann das Extrudat abgekühlt und zerkleinert werden. Es können auch einzelne Komponenten vorgemischt werden und dann die restlichen Ausgangsstoffe einzeln und/oder ebenfalls gemischt hinzugegeben werden. Die Mischtemperaturen liegen in der Regel bei 230 bis 320°C.

Nach einer weiteren bevorzugten Arbeitsweise können die Komponenten B) bis C) sowie gegebenenfalls D) mit einem Präpolymeren gemischt, konfektioniert und granuliert werden. Das erhaltene Granulat wird in fester Phase anschließend unter Inertgas kontinuierlich oder diskontinuierlich bei einer Temperatur unterhalb des Schmelzpunktes der Komponente A) bis zur gewünschten Viskosität kondensiert.

Die erfindungsgemäßen thermoplastischen Formmassen zeichnen sich durch eine gute Verarbeitbarkeit bei gleichzeitig guter Mechanik, sowie eine deutlich verbesserte Bindenahtfestigkeit und thermische Stabilität aus.

Diese eignen sich zur Herstellung von Fasern, Folien und Formkörpern jeglicher Art. Nachfolgend sind einige Beispiele genannt: Zylinderkopfhauben, Motorradabdeckungen, Ansaugrohre, Ladeluftkühlerkappen, Steckverbinder, Zahnräder, Lüfterräder, Kühlwasserkästen.

Im E/E-Bereich können mit fließverbesserten Polyamiden Stecker, Steckerteile, Steckverbinder, Membranschalter, Leiterplattenbaugruppen, mikroelektronische Bauteile, Spulen, I/0 Steckverbinder, Stecker für Leiterplatten (PCB), Stecker für flexible Leiterplatten (FPC), Stecker für flexible integrierte Schaltkreise (FFC), High-Speed Steckverbindungen, Klemmleisten, Anschlussstecker, Gerätestecker, Kabelbaumkomponenten, Schaltungsträger, Schaltungsträgerkomponen-ten, dreidimensional spritzgegossene Schaltungsträger, elektrische Verbindungselemente, mechatronische Komponenten hergestellt werden.

Im Auto-Innenraum ist eine Verwendung für Armaturentafeln, Lenkstockschalter, Sitzteile, Kopfstützen, Mittelkonsolen, Getriebe-Komponenten und Türmodule, im Auto-Außenraum für Türgriffe, Außenspiegelkomponenten, Scheibenwischerkomponenten, Scheibenwischerschutzgehäuse, Ziergitter, Dachreling, Schiebedachrahmen, Motorabdeckungen, Zylinderkopfhauben, Ansaugrohre (insbesondere Ansaugkrümmer), Scheibenwischer sowie Karosserieaußenteile möglich.

Für den Küchen- und Haushaltsbereich ist der Einsatz fließverbesserter Polyamide zur Herstellung von Komponenten für Küchengeräte, wie z.B. Friteusen, Bügeleisen, Knöpfe, sowie Anwendungen im Garten-Freizeitbereich, z.B. Komponenten für Bewässerungssysteme oder Gartengeräte und Türgriffe möglich.

### Beispiele

Es wurden folgende Komponenten eingesetzt:
Komponente A/1
Polyamid 66 mit einer Viskositätszahl VZ von 148 ml/g, gemessen als 0,5 gew.-%ige Lösung in 96 gew.-%iger Schwefelsäure bei 25°C nach ISO 307. (Es wurde Ultramid® A27der BASF SE verwendet).
Komponente B/1
Eisenpulver CAS-Nr. 7439-89-6:

| | | | |
|---|---|---|---|
| Fe | g/100 g | min. 97.7 | IR Detektion |
| C | g/100 g | max.1.0 | IRS |
| N | g/100 g | max. 1.0 | TCD |
| O | g/100 g | max. 0.6 | IRS |

Teilchengrößenverteilung: (Laserbeugung mit Beckmann LS13320)

| | |
|---|---|
| d₁₀ | 1,4 bis 2,7 µm |
| d₅₀ | 3,4 bis 5,2 µm |
| d₉₀ | 6,4 bis 9,2 µm |

BET-Oberfläche 0,44 m²/g (DIN ISO 9277)
Komponente C
2:1 Mischung von Aluminium-diethylphosphinat und Melaminpolyphosphat, zusätzlich 5 % Zink-borat (Exolit® OP1312 der Firma Clariant GmbH)
Komponente D/1
Glasfasern
Komponente D/2
Al-di/tristearate (Alugel® 30 DF der Firma Baerlocher)
Komponente D/31
CuJ/KJ im Verhältnis 1:4 (20%iger Batch in PA6)
Komponente D/32
Irganox® 1098 der Firma BASF SE

Die Formmassen wurden auf einer ZSK 26 bei einem Durchsatz von 25 kg/h und ca. 280°C flachem Temperaturprofil hergestellt.

Es wurden folgende Messungen durchgeführt:
Zugversuch nach ISO 527, Mechanikkennwerte vor und nach Wärmelagerung bei 200°C im Umluftofen
   VZ: c = 5 g/l in 96%iger Schwefelsäure, nach ISO 307
   Flammschutzeigenschaften gemäß UL 94

Die Zusammensetzungen der Formmassen und die Ergebnisse der Messungen sind den Tabellen zu entnehmen.

**Tabelle 1: Zusammensetzungen**

| | Komponenten [Gew.-%] | | | | | | |
|---|---|---|---|---|---|---|---|
| Bsp. | A/1 | B/1 | C | D/1 | D/2 | D/31 | D/32 |
| 1V | 54,6 | - | 20 | 25 | 0,2 | - | 0,2 |
| 2 | 53,6 | 1 | 20 | 25 | 0,2 | - | 0,2 |
| 3 | 53,3 | 1 | 20 | 25 | 0,2 | 0,3 | 0,2 |

**Tabelle 2: Mechanische Eigenschaften**

| | Tensile strength (Bruchspannung) | | | | |
|---|---|---|---|---|---|
| Bsp. | 0h | 250h | 500h | 750h | 1000h |
| 1V | 152 | 125 | 101 | 74 | 46 |
| 2 | 139 | 120 | 101 | 83 | 71 |
| 3 | 135 | 125 | 115 | 95 | 79 |
| | | | | | |

| | Elongation at break (Bruchdehnung) | | | | |
|---|---|---|---|---|---|
| Bsp. | 0h | 250h | 500h | 750h | 1000h |
| 1V | 2.97 | 2.10 | 1.30 | 0.91 | 0.68 |
| 2 | 2.79 | 2.40 | 1.58 | 1.29 | 1.37 |
| 3 | 2.57 | 2.50 | 1.88 | 1.55 | 1.36 |

**Tabelle 3: Flammschutz UL 94**

| Beisp. | 1,6mm Stärke |
|---|---|
| 1 V | V0 |
| 2 | V1 |
| 3 | V0 |

## Patentansprüche

1. Thermoplastische Formmassen, enthaltend
A) 10 bis 98 Gew.-% eines Polyamides
B) 0,001 bis 20 Gew.-% Eisenpulver mit einer Teilchengröße von maximal 10 µm (d₅₀-Wen; bestimmt mittels Laserbeugung gemäß der Beschreibung) und einer spezifischen BET-Oberfläche von 0,1 bis 5 m²/g gemäß DIN ISO 9277
C) 1 bis 40 Gew.-% eines halogenfreien Flammschutzmittels aus der Gruppe der phosphorhaltigen oder stickstoffhaltigen Verbindungen oder P-N-Kondensate oder deren Mischungen
D) 0 bis 70 Gew.-% weiterer Zusatzstoffe,
wobei die Summe der Gewichtsprozente der Komponenten A) bis D) 100 % ergibt.

2. Thermoplastische Formmassen nach Anspruch 1, enthaltend als Komponente D3) 0,05 bis 3 Gew.-% eines Cu-Stabilisators oder eines sterisch gehinderten Phenols oder deren Mischungen.

3. Thermoplastische Formmassen nach den Ansprüchen 1 oder 2, in denen die Komponente B) einen d₁₀-wert von 1 bis 5 µm aufweist.

4. Thermoplastische Formmassen nach den Ansprüchen 1 bis 3, in denen die Komponente B) einen d₉₀-Wert von 3 bis 35 µm aufweist.

5. Thermoplastische Formmassen nach den Ansprüchen 1 bis 4, in denen die Komponente B) einen C-Gehalt von 0,05 bis 1,2 g/100g aufweist (gemäß ASTM E 1019).

6. Thermoplastische Formmassen nach den Ansprüchen 1 bis 5, in denen die Komponente B) durch thermische Zersetzung von Eisenpentacarbonyl erhältlich ist.

7. Thermoplastische Formmassen nach den Ansprüchen 1 bis 6, in denen die Komponente B) eine Klopfdichte von 2,5 bis 5 g/cm³ aufweist.

8. Thermoplastische Formmassen nach den Ansprüchen 1 bis 7, in denen die Komponente C) aus Phosphinsäuresalzen der Formel (I) und/oder Diphosphinsäuresalzen der Formel (II) und/oder deren Polymeren aufgebaut ist 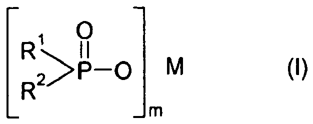 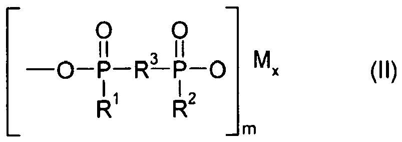 wobei die Substituenten folgende Bedeutung haben:
R¹, R² Wasserstoff, C₁- bis C₈-Alkyl, vorzugsweise C₁- bis C₄-Alkyl, linear oder verzweigt, z.B. Methyl, Ethyl, n-Propyl, iso-Propyl, n-Butyl, tert-Butyl, n-Pentyl; Phenyl; wobei bevorzugt mindestens ein Rest R¹ oder R², insbesondere R¹ und R² Wasserstoff ist;
R³ C₁- bis C₁₀-Alkylen, linear oder verzweigt, z.B. Methylen, Ethylen, n-Propylen, iso-Propylen, n-Butylen, tert.-Butylen, n-Pentylen, n-Octylen, n-Dodecylen; Arylen, z.B. Phenylen, Naphthylen; Alkylarylen, z.B. Methyl-phenylen, Ethyl-phenylen, tert.-Butyl-phenylen, Methyl-naphthylen, Ethyl-nahpthylen, tert.-Butyl-naphtylen; Arylalkylen, z.B. Pheny-methylen, Phenyl-ethylen, Phenyl-propylen, Phenyl-butylen;
M ein Erdalkali-, Alkalimethall, Al, Zn, Fe, Bor;
m eine ganze Zahl von 1 bis 3;
n eine ganze Zahl von 1 bis 3 und
x 1 oder 2.

9. Verwendung der thermoplastischen Formmassen gemäß den Ansprüchen 1 bis 8 zur Herstellung von Fasern, Folien und Formkörpern.

10. Fasern, Folien und Formkörper, erhältlich aus den thermoplastischen Formassen gemäß den Ansprüchen 1 bis 8.

## Claims

1. A thermoplastic molding composition, comprising
A) from 10 to 98% by weight of a polyamide
B) from 0.001 to 20% by weight of iron powder with a particle size of at most 10 µm (d₅₀ value; determined by means of laser scattering in accordance with the desciption) and a specific BET surface area of from 0.1 to 5 m²/g to DIN ISO 9277
C) from 1 to 40% by weight of a halogen-free flame retardant from the group of the phosphorus- or nitrogen-containing compounds or P-N condensates, or a mixture of these
D) from 0 to 70% by weight of further additives,
where the total of the percentages by weight of components A) to D) is 100%.

2. The thermoplastic molding composition according to claim 1, comprising, as component D3), from 0.05 to 3% by weight of a copper stabilizer or of a sterically hindered phenol, or a mixture of these.

3. The thermoplastic molding composition according to claim 1 or 2, in which component B) has a d₁₀ value of from 1 to 5 µm.

4. The thermoplastic molding composition according to claims 1 to 3, in which component B) has a d₉₀ value of from 3 to 35 µm.

5. The thermoplastic molding composition according to claims 1 to 4, in which component B) has a C content of from 0.05 to 1.2 g/100 g (according to ASTM E 1019).

6. The thermoplastic molding composition according to claims 1 to 5, in which component B) is obtainable via thermal decomposition of pentacarbonyliron.

7. The thermoplastic molding composition according to claims 1 to 6, in which component B) has a tap density of from 2.5 to 5 g/cm³.

8. The thermoplastic molding composition according to claims 1 to 7, in which component C) is composed of phosphinic salts of the formula (I) and/or diphosphinic salts of the formula (II), and/or of polymers of these 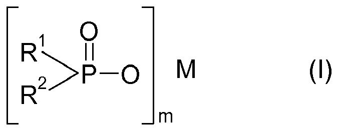 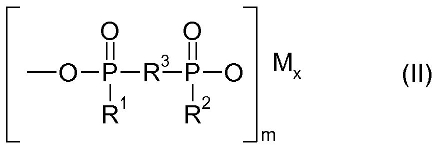 where the definitions of the substituents are as follows:
R¹ and R² are hydrogen or C₁-C₈-alkyl, preferably C₁-C₄-alkyl, linear or branched, e.g. methyl, ethyl, n-propyl, isopropyl, n-butyl, tert-butyl, n-pentyl; phenyl; where at least one radical R¹ or R² is preferably hydrogen and in particular R¹ and R² are hydrogen;
R³ is C₁-C₁₀-alkylene, linear or branched, e.g. methylene, ethylene, n-propylene, isopropylene, n-butylene, tert-butylene, n-pentylene, n-octylene, n-dodecylene; arylene, e.g. phenylene, naphthylene; alkylarylene, e.g. methylphenylene, ethylphenylene, tert-butylphenylene, methylnaphthylene, ethyl naphthylene, tert-butylnaphthylene; arylalkylene, e.g. phenylmethylene, phenylethylene, phenylpropylene, phenylbutylene;
M is an alkaline earth metal or alkali metal, Al, Zn, Fe, boron;
m is a whole number from 1 to 3;
n is a whole number of 1 and 3, and
x is 1 or 2.

9. The use of the thermoplastic molding compositions according to claims 1 to 8 for the production of fibers, foils, and moldings.

10. A fiber, a foil, or a molding, obtainable from the thermoplastic molding compositions according to claims 1 to 8.

## Revendications

1. Matières à mouler thermoplastiques, contenant
A) 10 à 98 % en poids d'un polyamide
B) 0,001 à 20 % en poids d'une poudre de fer ayant une taille de particule d'au maximum 10 µm (valeur d₅₀ ; déterminée par diffraction laser selon la description) et une surface spécifique BET de 0,1 à 5 m²/g selon DIN ISO 9277
C) 1 à 40 % en poids d'un agent ignifuge sans halogène, choisi dans le groupe des composés phosphorés ou azotés ou des produits de condensation P-N ou des mélanges de ceux-ci
D) 0 à 70 % en poids d'autres additifs,
la somme des pourcentages en poids des composants A) à D) étant égale à 100 %.

2. Matières à mouler thermoplastiques selon la revendication 1, contenant comme composant D3) 0,05 à 3 % en poids d'un stabilisant-Cu ou d'un phénol à empêchement stérique ou de mélanges de ceux-ci.

3. Matières à mouler thermoplastiques selon la revendication 1 ou 2, dans lesquelles le composant B) présente une valeur d₁₀ de 1 à 5 µm.

4. Matières à mouler thermoplastiques selon les revendications 1 à 3, dans lesquelles le composant B) présente une valeur d₉₀ de 3 à 35 µm.

5. Matières à mouler thermoplastiques selon les revendications 1 à 4, dans lesquelles le composant B) a une teneur en C de 0,05 à 1,2 g/100 g (selon ASTM E 1019).

6. Matières à mouler thermoplastiques selon les revendications 1 à 5, dans lesquelles le composant B) peut être obtenu par décomposition thermique de pentacarbonyle de fer.

7. Matières à mouler thermoplastiques selon les revendications 1 à 6, dans lesquelles le composant B) présente une densité apparente après tassement de 2,5 à 5 g/cm³.

8. Matières à mouler thermoplastiques selon les revendications 1 à 7, dans lesquelles le composant C) est constitué de sels d'acide phosphinique de formule (I) et/ou de sels d'acide diphosphinique de formule (II) et/ou de leurs polymères 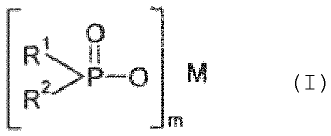 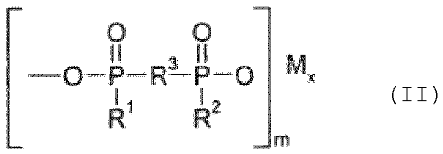 formules dans lesquelles les substituants ont la signification suivante :
R¹, R² représentent un atome d'hydrogène, un groupe alkyle en C₁-C₈, de préférence un groupe alkyle en C₁-C₄, linéaire ou ramifié, par exemple méthyle, éthyle, n-propyle, isopropyle, n-butyle, tert-butyle, n-pentyle ; phényle ; de préférence au moins un radical R¹ ou R², en particulier R¹ et R² étant un/des atome(s) d'hydrogène ;
R³ représente un groupe alkylène en C₁-C₁₀, linéaire ou ramifié, par exemple méthylène, éthylène, n-propylène, isopropylène, n-butylène, tert-butylène, n-pentylène, n-octylène, n-dodécylène ; arylène, par exemple phénylène, naphtylène ; alkylarylène, par exemple méthyl-phénylène, éthyl-phénylène, tert-butyl-phénylène, méthyl-naphtylène, éthyl-naphtylène, tert-butyl-naphtylène ; arylalkylène, par exemple phényl-méthylène, phényl-éthylène, phényl-propylène, phényl-butylène ;
M représente un métal alcalin, alcalino-terreux, Al, Zn, Fe, bore ;
m représente un nombre entier valant de 1 à 3 ;
n représente un nombre entier valant de 1 à 3 ;
x vaut 1 ou 2.

9. Utilisation des matières à mouler thermoplastiques selon les revendications 1 à 8, pour la production de fibres, films et corps moulés.

10. Fibres, films et corps moulés, pouvant être obtenus à partir des matières à mouler thermoplastiques selon les revendications 1 à 8.
